# EUROPÄISCHE PATENTSCHRIFT

(11) **EP 1 466 519 B1**
(45) Veröffentlichungstag und Bekanntmachung des Hinweises auf die Patenterteilung: **12.07.2006**
(21) Anmeldenummer: 04008165.5
(22) Anmeldetag: 03.04.2004
(51) Int. Cl.: A01F 15/08

(54) **Rundballenpresse**
Rotorballer
Presse à balles rondes

(30) Priorität: 08.04.2003 DE 10315919; 08.04.2003 DE 10315918
(43) Veröffentlichungstag der Anmeldung: 13.10.2004
(73) Patentinhaber: Welger Maschinenfabrik GmbH, D-38304 Wolfenbüttel (DE)
(72) Erfinder: Röhrbein, Jürgen, 38159 Wahle (DE); Rodewald, Peter, 38321 Neindorf (DE)

(56) Entgegenhaltungen:
- EP-A- 0 498 576
- DE-U- 8 428 625
- DE-U- 29 912 884
- US-A- 1 510 885
- US-A- 4 638 623

## Beschreibung

Die Erfindung betrifft eine Rundballenpresse für landwirtschaftliche Halmgüter nach dem Oberbegriff des Patentanspruches 1.

Die vorstehend beschriebene Rundballenpresse lässt sich der EP 0498576 A1 entnehmen. Hier ist an einer Seitenwand des Vordergehäuses ein Verteilergetriebe vorgesehen. Das Verteilergetriebe hat eine Antriebswelle, die von einem in der Mitte zwischen den Seitenwänden angeordneten Hauptgetriebe kommt und zwei Abtriebswellen, die in Maschinenlängsrichtung verlaufen. Die eine Abtriebswelle treibt eine oberhalb der Gutzuführöffnung im Vordergehäuse angeordnete Starterwalze und eine ebenfalls im Vordergehäuse unterhalb der Gutzuführöffnung angeordnete Boden-Presswalze an. Die andere Abtriebswelle treibt ein Presselement an, das in diesem Fall von einem umlaufenden Förderband gebildet wird, das den Pressraum sowohl im Vorder- als auch im Hintergehäuse begrenzt. Ein- und Ausgangswelle des Hauptgetriebes werden mit der Zapfwellendrehzahl 540 ¹/min angetrieben. Um die Bauteile, insbesondere die Wellen, möglichst leicht dimensionieren zu können, erfolgt eine Drehzahlübersetzung ins Schnelle (von 540¹/min auf 1814 ¹/min) entweder durch ein Planetengetriebe im Verteilergetriebe oder durch ein dem Hauptgetriebe vorgeschaltetes Planetengetriebe. Anschließend erfolgt eine Kegelradstufe und eine zweistufige Untersetzung ins Langsame über jeweils ein einem Arbeitsorgan zugeordnetes Planetengetriebe auf die benötigte Drehzahl.

Nachteilig ist vor allem die sehr ungleiche Lastverteilung, einerseits auf nur eine Boden-Presswalze bzw. eine Starterwalze und andererseits auf das sehr große Förderbandsegment als Presselement. Darüber hinaus ist der Bauaufwand des Gesamtantriebes sehr groß wegen der fünf Getriebestufen vor jedem Arbeitsorgan (jeweils drei Winkeltriebe und zwei Planetengetriebe) und der Verwendung an sich bauaufwendiger Getriebe. Auch die Lager und die dem Förderbandsegment zugeordneten Antriebe sowie deren Befestigungen müssen stabil ausgelegt sein aufgrund der relativ hohen Belastung, so dass bei Bauteilegleichheit die anderen Getriebe überdimensioniert sind. Für Rundballenpressen, deren Pressraum aus Presswalzen besteht, ist diese Anordnung deshalb ungeeignet.

Durch die DE 8428625.3 U1 ist eine andere Konstruktion für Rundballenpressen der sogenannten Festkammerbauart bekannt, deren Pressraum aus einer Vielzahl von einzelnen antreibbare Presswalzen besteht. Hierbei ist in Kraftflussrichtung hinter einem Hauptgetriebe ein Kegelradgetriebe angeordnet, dessen Abtriebswelle unmittelbar mit der Drehachse der Presswalze verbunden ist, um welche das Hintergehäuse aufklappbar ist. Das Kegelradgetriebe ist am Vordergehäuse angeordnet und steht über eine Gelenkwelle mit dem Hauptgetriebe in Verbindung, das wahlweise von der Schlepperzapfwelle mit 540 ¹/min oder 1000 ¹/min antreibbar ist. An jedem Presselement ist einendig eine Kurbel angeordnet. Alle Kurbelelemente sind durch zwei Koppelglieder verbunden, die vom Kegelradgetriebe angetrieben werden.

Von großem Nachteil ist, dass sowohl das Kegelradgetriebe als auch insbesondere dessen Lagerung und Befestigung sehr stabil ausgelegt sein müssen, weil die gesamten Antriebskräfte aller Presselemente zu übertragen sind. Darüber hinaus sind die Abstützkräfte in den Lagerungen aufgrund der Kurbelantriebe sehr ungleichmäßig, weil alle Kurbelelemente in gleicher Richtung wirken. Um ungewollte Schwingungen zu vermeiden, ist ein Massenausgleich notwendig, wie dieser beispielsweise in der DE 3409713 A1 dargestellt und beschrieben ist.

Aufgrund der bekannten Nachteile sind die in der Patentliteratur bekannten Lösungsvorschläge von kettenlosen Antrieben bei Rundballenpressen in Praxis bisher nicht eingeführt worden. Deshalb werden heute noch alle auf dem Markt befindlichen Rundballenpressen über Kettentriebe angetrieben.

Die Anforderungen an die Antriebe von Landmaschinen sind in den letzten Jahren aufgrund verfügbarer Schlepperzapfwellenleistungen bis 100 kW erheblich angestiegen. Eine Zapfwellenantriebsdrehzahl von 1000¹/min ist heute Stand der Technik.

Der Erfindung liegt ausgehend von der eingangs beschriebenen Rundballenpresse die Aufgabe zugrunde, den Antrieb zu verbessern und zu vereinfachen.

Diese Aufgabe wird erfindungsgemäß dadurch gelöst, dass die Abtriebswelle über wenigstens ein Stirnradgetriebe ein oder mehrere Presselemente antreibt. Hinsichtlich der weiteren Ausgestaltung der Erfindung wird auf die Ansprüche 2 bis 19 verwiesen.

Auf überraschend einfache Weise ermöglicht die erfindungsgemäße Gestaltung mit wenigstens einem Stirnradgetriebe einen direkten Antrieb der Presselemente allein durch eine zweistufige Untersetzung zwischen Schlepperzapfwelle und Presselement. Darüber hinaus vermeidet diese Gestaltung den Durchtrieb von Kräften durch die koaxial zur Schwenkachse des Hintergehäuses angeordnete Presswalze. Bei allen auf dem Markt befindlichen Rundballenpressen mit Presswalzen erfolgt bisher die Kraftübertragung auf die Presswalzen des Hintergehäuses über die koaxial zur Schwenkachse des Hintergehäuses angeordnete Presswalze mittels eines Doppelkettenrades. Das Stirnradgetriebe ergibt eine einfache, flache Bauart, die aufgrund der Drehzahlen sogar als offenes Getriebe ausgebildet sein kann. Ein weiterer Vorteil besteht in der einfachen Montage und Demontage des Getriebes.

Nach einem weiteren Merkmal der Erfindung ist die Antriebswelle die Hauptantriebswelle, welche direkt über eine Gelenkwelle oder einen Gelenkwellenstrang oder indirekt über ein Winkelgetriebe und eine Querwelle mit der Schlepperzapfwelle in Wirkverbindung steht. Dadurch entfällt der bisher übliche Kegelradantrieb des in Pressenmitte angeordneten Hauptgetriebes. Eine günstige Dimensionierung aller Bauteile ist dadurch gewährleistet, dass die Hauptantriebswelle eine Drehzahl von 1000 ¹/min hat.

Ein entscheidender Vorteil für den Antrieb von Rundballenpressen mit einer Vielzahl von Presswalzen wird dadurch erreicht, dass die Kraftübertragung von wenigstens einem direkt durch das Stirnrad angetriebenen Presselement auf wenigstens ein weiteres Presselement durch ortsfeste, aber drehbar an einer Seitenwand angeordnete Stirnräder erfolgt. Von dem antreibenden Stirnrad aus lassen sich nach beiden Seiten weitere Presselemente antreiben, die auf einfachste Weise durch Stirnräder gekoppelt werden. Diese Bauart ermöglicht auch eine einfache Montage und Demontage vorgefertigter Presswalzen mit Lagerung und Stirnrad.

Grundsätzlich ist es möglich, dass wenigstens einem Verteilergetriebe ein weiteres Verteilergetriebe zum leistungsverzweigten Antrieb nachgeschaltet ist. Auf diese Art und Weise werden die Verteilergetriebe nur noch auf die Teilleistung der angeschlossenen Presswalzen ausgelegt und nicht mehr auf die gesamte Pressleistung.

Aufgrund der höheren Drehzahlen sind die Verteilergetriebe als geschlossene Getriebe ausgeführt und damit völlig wartungsfrei.

Ein Ausführungsbeispiel der Erfindung ist in der Zeichnung dargestellt und wird im folgenden näher beschrieben. Es zeigt
- Fig. 1: eine Seitenansicht einer erfindungsgemäßen Rundballenpresse;
- Fig. 2: eine Ansicht nach Fig. 1 in geöffneter Stellung des Hintergehäuses, wobei der untere Teil der Rundballenpresse weggelassen ist,
- Fig. 3: eine Seitenansicht auf das Antriebssystem einer Rundballenpresse gemäß Fig. 1 und Fig. 2, wobei zur Verdeutlichung die Rundballenpresse selbst weggelassen wurde;
- Fig. 4: eine Schnittansicht in Blickrichtung der Pfeile X auf die im Hintergehäuse angeordneten Antriebe gemäß Fig. 3 und
- Fig. 5: eine Draufsicht auf die rechte Hälfte einer Rundballenpresse gemäß Fig. 1 mit komplettem Antriebsstrang bis zur Schlepperzapfwelle.

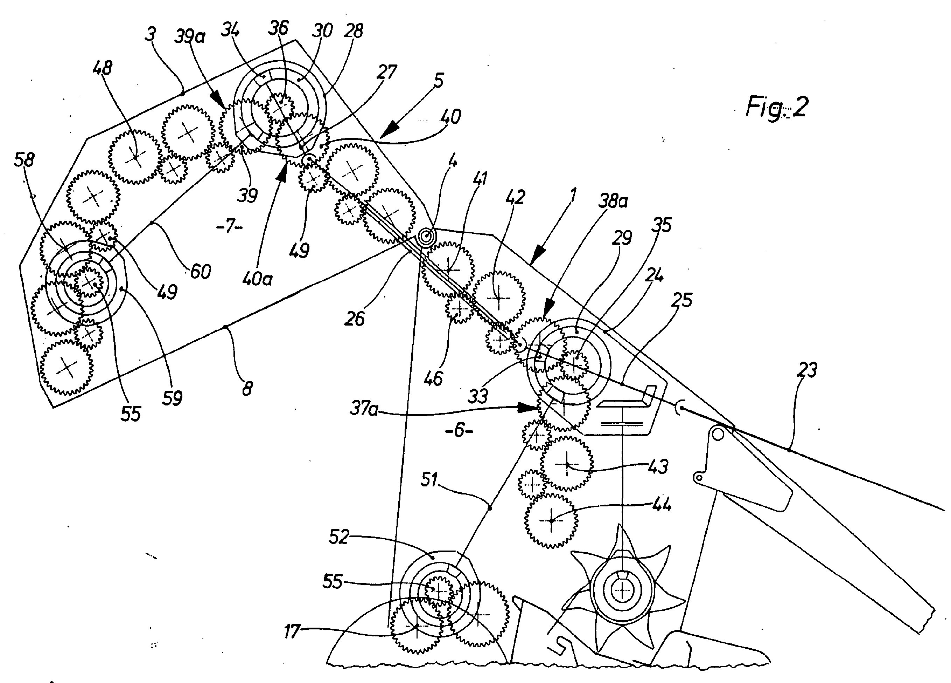

Die dargestellte Rundballenpresse besitzt ein zweiteiliges Pressraumgehäuse, bestehend aus einem Vordergehäuse 1, welches gestellfest auf einem Fahrgestell 2 ruht und einem Hintergehäuse 3, welches nach Formung eines Ballens um eine horizontale obere Schwenkachse 4 zum Ballenausstoß in eine Entladestellung 5 (Fig.2) aufklappbar ist.

Das Vordergehäuse 1 weist zwei Seitenwände 6 auf, die durch Querverbindungen miteinander verbunden sind. Das Hintergehäuse 3 besitzt zwei Seitenwände 7. Diese liegen mit einer Vorderkante 8 in geschlossener Stellung 9 an den Seitenwänden 6 des Vordergehäuses 1 an. Am Vordergehäuse 1 greift ein Zugglied 10 an zur Verbindung mit einem nicht dargestellten Schlepper, welcher die Rundballenpresse in durch Pfeil 11 gekennzeichnete Richtung über das Feld zieht.

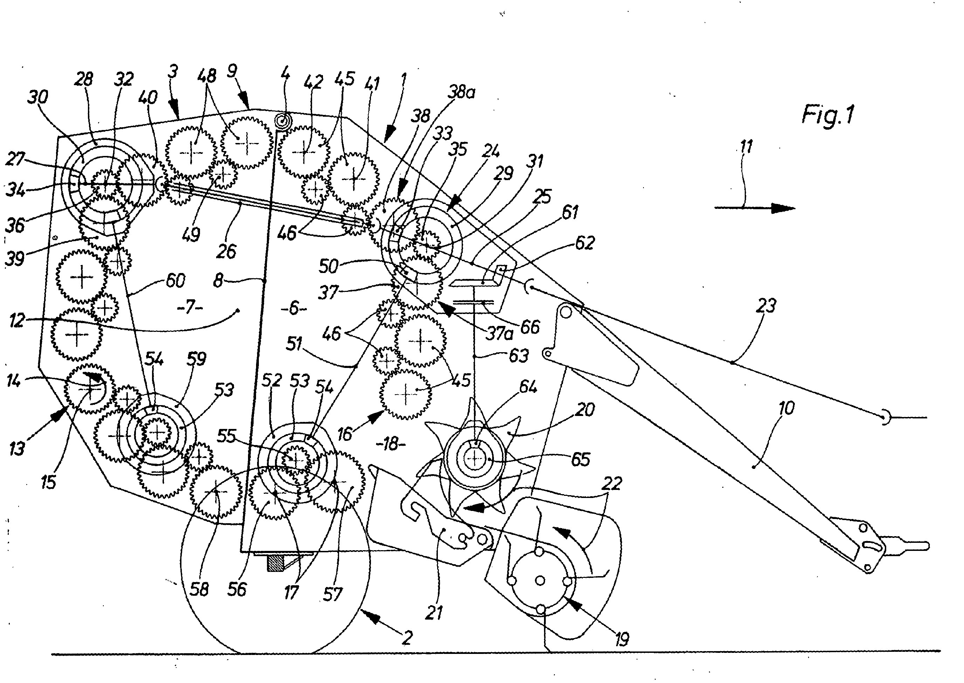

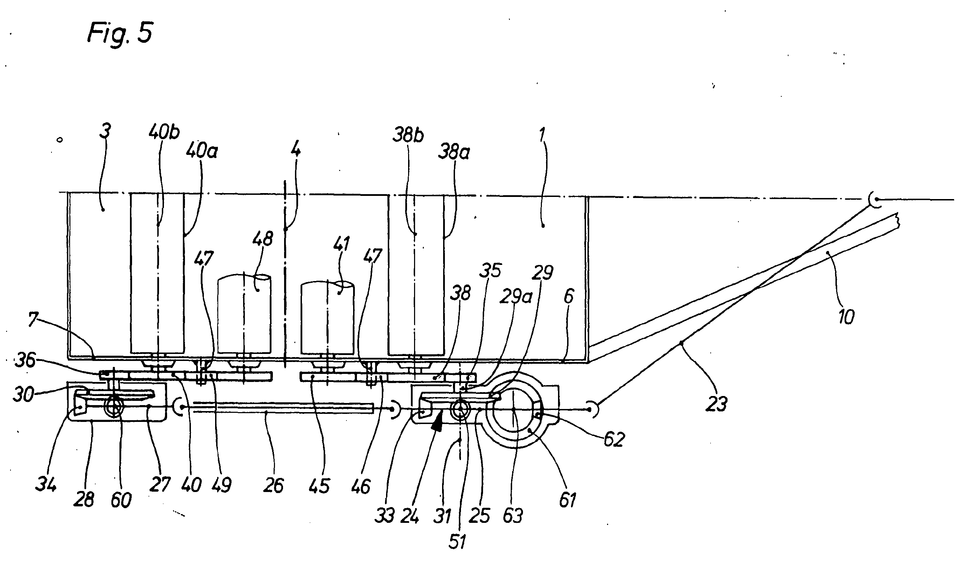

Im Pressraumgehäuse wird ein Pressraum 12 gebildet, der in diesem Ausführungsbeispiel einen konstanten Durchmesser besitzt. Der Pressraum 12 wird umfangsseitig von rotierend antreibbaren Presselementen begrenzt, die in diesem Ausführungsbeispiel in den Seitenwänden 6, 7 gelagerte Presswalzen 13 (Fig.5) sind, aber auch von Riemen, Stabkettenförderern oder Kombinationen davon gebildet werden können. Die gemeinsame Umlaufrichtung der Presswalzen 13 ist durch Pfeil 14 gekennzeichnet. In den Figuren 1 bis 4 sind vereinfacht nur die Drehachsen 15 der Presswalzen 13 dargestellt, um Überschneidungen zu vermeiden. In den Zeichnungen ist im folgenden deshalb jeweils die Drehachse der Presswalze statt der Presswalze mit der Bezugslinie gekennzeichnet.

Zwischen einer oberen Presswalze 16 und einer Boden- Presswalze 17 ist eine Zuführöffnung 18 für Halmgut freigelassen. Mit einer an sich bekannten Pick-up 19 (Aufnahmeeinrichtung) hebt die Rundballenpresse Halmgut vom Boden auf und fördert es gegebenenfalls durch eine Schneideinrichtung, bestehend aus einem Förder- / Schneidrotor 20 und Schneidmessern 21, in die Zuführöffnung 18 des Pressraumes 12. Während des Betriebes laufen Pick-up 19 und Förder- / Schneidrotor 20 in durch Pfeile 22 gekennzeichnete Richtungen um.

Die Kraftübertragung erfolgt von einer nicht dargestellten Schlepperzapfwelle aus über eine oder mehrere Gelenkwellen 23 auf ein erstes Verteilergetriebe 24. Das Verteilergetriebe 24 ist auf der in Fahrtrichtung gesehen rechten Seite der Rundballenpresse im Abstand oberhalb der Gutzuführöffnung 18 an der Seitenwand 6 des Vordergehäuses 1 befestigt. Die Befestigung kann aber auch über einen Hilfsrahmen oder am Pressenrahmen im Bereich der Seitenwand 6 erfolgen.

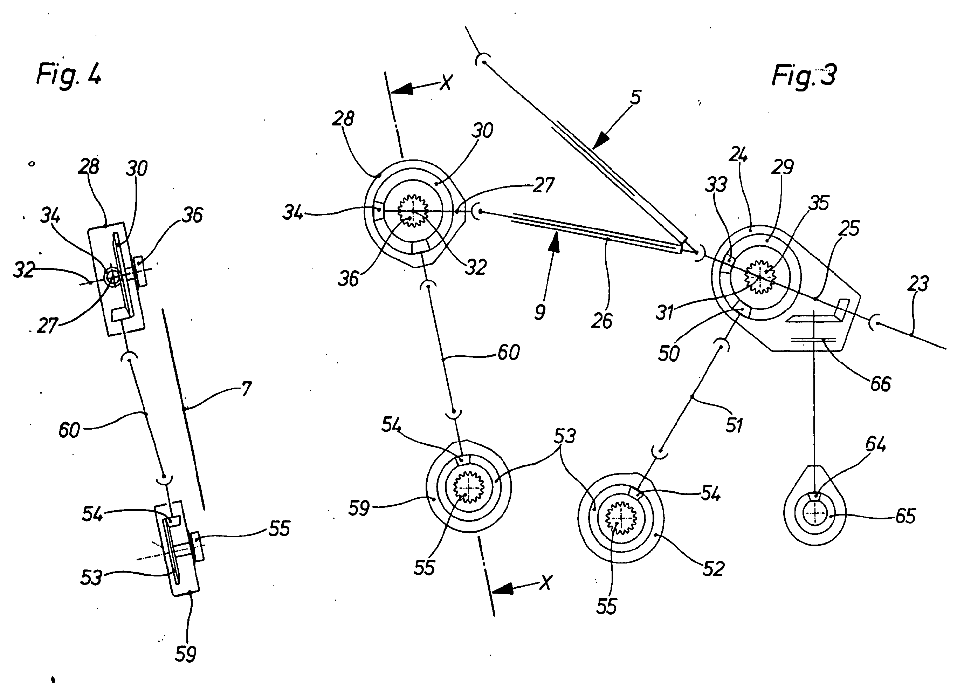

Im Verteilergetriebe 24 ist eine Hauptantriebswelle 25 mit in Maschinenlängsachse verlaufender Drehachse gelagert. Die Hauptantriebswelle 25 ist nach hinten als Verlängerung aus dem Verteilergetriebe 24 herausgeführt und mit einer längenveränderbaren Gelenkwelle 26 verbunden, welche an die Antriebswelle 27 eines zweiten Verteilergetriebes 28 angeschlossen ist, das an der Seitenwand 7 des Hintergehäuses 3 befestigt ist. Die Verteilergetriebe 24, 28 sind bis auf die Gehäuse baugleich und spiegelbildlich mit Bezug auf die durch die Schwenkachse 4 gelegte Teilungsebene von Vorder- 1 und Hintergehäuse 3 angeordnet. Dadurch schließt die Gelenkwelle 26 während des Öffnens des Hintergehäuses 3 und in wie in Fig. 3 gezeigter geöffneter Stellung 5 des Hintergehäuses 3 ständig gleiche Beugewinkel mit deren An- bzw. Abtriebswelle 25, 27 ein.

In jedem Verteilergetriebe 24, 28 ist ein Tellerrad 29, 30 mit waagerechter, quer zur Maschinenlängsachse verlaufender Drehachse 31, 32 gelagert. Das Tellerrad 29 des ersten Verteilergetriebes 24 steht mit einem auf der Hauptantriebwelle 25 befestigten, im Verteilergetriebe 24 gelagerten Antriebsritzel 33 im Eingriff und bildet eine erste Untersetzungsstufe von beispielsweise 1:4. Das Tellerrad 30 des zweiten Verteilergetriebes 28 steht mit einem Antriebsritzel 34 im Eingriff, das auf der im zweiten Verteilergetriebe 28 gelagerten Antriebswelle 27 befestigt ist, die über die Gelenkwelle 26 mit der Drehzahl der Hauptantriebswelle 25 angetrieben wird und die gleiche Untersetzungsstufe aufweist. Jedes Tellerrad 29, 30 trägt an seinem Wellenstummel 29a ein Stirnrad 35, 36, welches jeweils mit auf zwei benachbarten Presswalzen 37a, 38a, 39a, 40a befestigten Stirnrädern 37, 38; 39, 40 kämmt und eine zweite Untersetzungsstufe von 1:2 darstellt. Zwei oberhalb der direkt angetriebenen Presswalze 37a angeordnete Presswalzen 41, 42 und zwei unterhalb der direkt angetriebenen Presswalze 38a angeordnete Presswalzen 43, 44 tragen ebenfalls Stirnräder 45. Die Kopplung dieser Presswalzen 41 bis 44 mit den direkt angetriebenen Presswalzen 37a, 38a erfolgt durch Stirnräder 46, die drehbar auf ortsfest an der Seitenwand 6 befestigten Lagerzapfen 47 gelagert sind. In gleicher Weise erfolgt der Antrieb der oberen sechs im Hintergehäuse 3 gelagerten Presswalzen 39a, 40a, 48 über das angetriebene Stirnrad 36 und ortsfest aber drehbar an der Seitenwand 7 des Hintergehäuses 3 gelagerte Stirnräder 49, die die Presswalzen 48 koppeln. In Fig. 5 sind die Drehachsen der Presswalzen 38a, 40a mit den Ziffern 38b und 40b gekennzeichnet. Alle Stirnradgetriebe 35 bis 40 und 45, 46, 49 sind als offene Getriebe ausgebildet und wartungsfrei.

Das Tellerrad 29 des ersten Verteilergetriebes 24 steht mit einem zweiten Kegelrad 50 im Eingriff, das auf einer Abtriebswelle 51 sitzt, die zu einem im unteren Bereich des Vordergehäuses 1 an dessen Seitenwand 6 befestigten Verteilergetriebe 52 führt, von dem der Antrieb zweier Boden-Presswalzen 17 abgeleitet ist. Der Antrieb dieser Boden-Presswalzen 17 erfolgt in gleicher Weise wie der Antrieb der oberen Presswalzen 37a, 38a über ein Kegelradgetriebe 53, 54 mit einer Untersetzung von 1:4 und ein offenes Stirnradgetriebe 55, 56, 57 mit einer Untersetzung von 1:2. In der Abtriebswelle 51 ist eine nicht dargestellte Freilaufkupplung angeordnet, die eine Drehung der Boden- Presswalze 17 in Richtung des Pfeiles 14 durch den Ballen zulässt, wie es beim Ballenausstoß auftreten kann.

In gleicher Art und Weise werden die unteren vier im Hintergehäuse 3 angeordneten Presswalzen 58 durch ein an der Seitenwand 7 des Hintergehäuses 3 angeordnetes Verteilergetriebe 59 über eine vom zweiten Verteilergetriebe 28 kommende Abtriebswelle 60 angetrieben. Das untere Verteilergetriebe 59 des Hintergehäuses 3 ist baugleich zu dem unteren Verteilergetriebe 52 des Vordergehäuses 1.

Alle Verteilergetriebe 24, 28, 52, 59 sind als geschlossene, mit Schmiermittel befüllte Getriebe ausgeführt und damit wartungsfrei.

Jedes Verteilergetriebe 24, 28, 52, 59 ist nur noch auf den Leistungsbedarf der jeweils angeschlossenen Presswalzen ausgelegt. Um bei Blockierungen eines Bauteiles Schäden in den Antrieben zu vermeiden, weist jedes Verteilergetriebe eine nicht dargestellte Überlastsicherung, beispielsweise eine an sich bekannte Scherbolzensicherung auf.

In diesem Ausführungsbeispiel ist in dem ersten Verteilergetriebe 24 ein Tellerrad 61 mit vertikaler Drehachse gelagert, das mit einem auf der Hauptantriebswelle 25 sitzenden Antriebsritzel 62 im Eingriff steht. Die Abtriebswelle 63 des Tellerrades 61 führt zu einem ebenfalls geschlossenen Kegelradgetriebe 64, 65, von welchem der Förder-/ Schneidrotor 20 angetrieben wird. In der Abtriebswelle 63 ist eine schaltbare Überlastkupplung 66 angeordnet, die beispielsweise beim Ansprechen der Überlastsicherung eines Verteilergetriebes 24, 28, 52, 59 sofort die Gutzufuhr unterbricht. Das Kegelradgetriebe 61, 62 kann auch separat vom ersten Verteilergetriebe 24 ausgebildet und angeordnet sein.

Die mit der Erfindung erzielten Vorteile bestehen insbesondere darin, dass durch die Kombination von einfachen geschlossenen Verteilergetrieben mit einfachen offenen Zahnradgetrieben einerseits eine bedarfsgerechte Leistungsverzweigung auf die Presswalzen und andererseits eine einfache und wartungsfreie Bauweise gewährleistet ist. Die Leistungsverzweigungen ermöglichen kleiner dimensionierte Baugruppen. Insgesamt stellt die Erfindung eine wirtschaftliche Gesamtkonstruktion dar, auch aufgrund der hohen Betriebssicherheit, des niedrigen Verschleißes und des geringsten Wartungsbedarfes. Vorteilhaft ist auch die einfache Montage und Demontage der einzelnen vormontierten Presswalzen in Modulbauweise.

Während des Betriebes werden alle Presswalzen in durch Pfeil 14 gekennzeichnete Richtung mit gleicher Walzenumfangsgeschwindigkeit angetrieben. Darüber hinaus ermöglicht diese Konstruktion auf besonders einfache Weise durch Wahl des Übersetzungsverhältnisses eine Variation der Drehzahlen der auf dem Presskammerumfang verteilten Presswalzen oder Presswalzengruppen. So lässt sich z.B. mit einer Anhebung der Walzenumfangsgeschwindigkeit in Teilbereichen des Presskammerumfangs eine höhere Kraftschlussbeanspruchung an den geringer belasteten Presswalzen erzielen, wodurch eine Erhöhung der Pressdichte möglich ist.

## Patentansprüche

1. Rundballenpresse für landwirtschaftliche Halmgüter, deren Pressraum (12) umfangsseitig durch antreibbare Presselemente (17, 37a, 38a, 39a, 40a, 41 bis 44, 48, 58) und stirnseitig durch zweigeteilte Seitenwände (6, 7) begrenzt wird, wobei der Antrieb der Presselemente über wenigstens ein im Bereich einer Seitenwand (6) angeordnetes Verteilergetriebe (24) erfolgt, welches eine Antriebswelle (25) und wenigstens zwei Abtriebswellen (29a, 51,) aufweist, wobei wenigstens eine Abtriebswelle (29a) eines Verteilergetriebes (24, 28, 52, 59) parallel und im Abstand zur Drehachse (38b, 40b) eines oder mehrerer Presselementes/e (37a, 38a, 39a, 40a) angeordnet ist, **dadurch gekennzeichnet, dass** die Abtriebswelle (29a) über wenigstens ein Stirnradgetriebe (35, 38) ein oder mehrere Presselement/e (38a, 37a) antreibt.

2. Rundballenpresse nach Anspruch 1, **dadurch gekennzeichnet, dass** die Abtriebswelle (29a) von der Drehachse (31) eines Tellerrades (29) gebildet wird, welches über ein Kegelradritzel (33) mit der Antriebswelle (25) im Eingriff steht.

3. Rundballenpresse nach einem der vorhergehenden Ansprüche, **dadurch gekennzeichnet, dass** die Antriebswelle (25) die Hauptantriebswelle ist, welche direkt über eine Gelenkwelle (23) oder einen Gelenkwellenstrang oder indirekt über ein Winkelgetriebe und eine Querwelle mit der Schlepperzapfwelle in Wirkverbindung steht.

4. Rundballenpresse nach einem oder mehreren der vorhergehenden Ansprüche, **dadurch gekennzeichnet, dass** die Abtriebswelle (29a) rechtwinklig zur Antriebswelle (25) angeordnet ist.

5. Rundballenpresse nach einem oder mehreren der Ansprüche 1 bis 4, **dadurch gekennzeichnet, dass** wenigstens ein Stirnradgetriebe (35, 38) als offenes Getriebe ausgeführt ist.

6. Rundballenpresse nach einem oder mehreren der Ansprüche 1 bis 4, **dadurch gekennzeichnet, dass** wenigstens ein Stirnradgetriebe (35, 38) als geschlossenes Getriebe ausgeführt ist.

7. Rundballenpresse nach einem oder mehreren der vorhergehenden Ansprüche, **dadurch gekennzeichnet, dass** die Kraftübertragung von wenigstens einem direkt durch das Stirnrad (35) angetriebenen Presselement (37a, 38a) auf wenigstens ein weiteres Presselement (41, 42, 43, 44) durch ortsfeste, aber drehbar an einer Seitenwand (6) angeordnete Stirnräder (46) erfolgt.

8. Rundballenpresse nach einem oder mehreren der vorhergehenden Ansprüche, **dadurch gekennzeichnet, dass** wenigstens eine andere, quer zur Drehachse (38b, 40b) eines Presselementes (38a, 40a) gerichtete Abtriebswelle (26, 51, 60) zum Antrieb eines oder mehrerer Presselementes/e (48, 58, 17) dient.

9. Rundballenpresse nach einem oder mehreren der vorhergehenden Ansprüche, **dadurch gekennzeichnet, dass** wenigstens eine Abtriebswelle (63) zum Antrieb der Zuführelemente (19, 20) dient.

10. Rundballenpresse nach einem oder mehreren der vorhergehenden Ansprüche, **dadurch gekennzeichnet, dass** wenigstens ein Verteilergetriebe (24, 52) dem Vordergehäuse (1) zugeordnet ist.

11. Rundballenpresse nach einem oder mehreren der vorhergehenden Ansprüche, **dadurch gekennzeichnet, dass** wenigstens ein Verteilergetriebe (28, 59) dem Hintergehäuse (3) zugeordnet ist.

12. Rundballenpresse nach den Ansprüchen 10 und 11, **dadurch gekennzeichnet, dass** Mittel (26) zur Kraftübertragung von dem Verteilergetriebe (24) auf das Verteilergetriebe (28) vorgesehen sind.

13. Rundballenpresse nach einem oder mehreren der vorhergehenden Ansprüche, **dadurch gekennzeichnet, dass** wenigstens einem Verteilergetriebe (24, 28) ein weiteres Verteilergetriebe (52, 59) zum leistungsverzweigten Antrieb nachgeschaltet ist.

14. Rundballenpresse nach einem oder mehreren der vorhergehenden Ansprüche, **dadurch gekennzeichnet, dass** die Verteilergetriebe (24, 28, 52, 59) als geschlossene Getriebe ausgeführt sind.

15. Rundballenpresse nach einem oder mehreren der vorhergehenden Ansprüche, **dadurch gekennzeichnet, dass** das Verteilergetriebe (24) und das Getriebe (61, 62) zum Antrieb der Zuführelemente (19, 20) eine Baueinheit bilden

16. Rundballenpresse nach einem oder mehreren der vorhergehenden Ansprüche, **dadurch gekennzeichnet, dass** die Presselemente als in den Seitenwänden (6, 7) gelagerte Presswalzen (17, 37a, 38a, 39a, 40a, 41 bis 44, 48, 58) ausgebildet sind.

17. Rundballenpresse nach Anspruch 16, **dadurch gekennzeichnet, dass** eine oder mehrere Presswalze/n vormontierte Stirnräder (37 bis 40) und Lager aufweist/en und als Modul an den Seitenwänden (6, 7) anbringbar ist/sind.

18. Rundballenpresse nach den Ansprüchen 16 und 17, **dadurch gekennzeichnet, dass** wenigstens eine Seitenwand U-förmige Ausnehmungen aufweist zum Einsetzen bzw. Herausnehmen einer Presswalze.

19. Rundballenpresse nach einem oder mehreren der vorhergehenden Ansprüche 16 bis 18, **dadurch gekennzeichnet, dass** ein oder mehrere Presswalzen auf Seitenwandsegmenten vormontiert sind/welche als Einheit an der Seitenwand anbringbar sind.

## Claims

1. A round baler for agricultural produce, the baling chamber (12) of which is bounded circumferentially by drivable baling members (17, 37a, 38a, 39a, 40a, 41 to 44, 48, 58) and at the ends by bipartite side walls (6, 7), wherein the drive of the baling members is produced by at least one power divider (24) which is arranged in the region of a side wall (6) and has a drive shaft (25) and at least two output shafts (29a, 51), wherein at least one output shaft (29a) of a power divider (24, 28, 52, 59) is arranged parallel with and spaced apart from the rotation axis (38b, 40b) of one or more baling members (37a, 38a, 39a, 40a), **characterised in that** the output shaft (29a) drives one or more baling members (38a, 37a) via at least one spur-gear transmission (35, 38).

2. A round baler according to claim 1, **characterised in that** the output shaft (29a) is formed by the rotation axis (31) of a crown wheel (29) which engages with the drive shaft (25) via a bevel-gear pinion (33).

3. A round baler according to either one of the preceding claims, **characterised in that** the drive shaft (25) is the main drive shaft which is operatively connected to the power take-off shaft of the tractor directly by a propeller shaft (23) or a propeller-shaft train or indirectly via an angular transmission and a transverse shaft.

4. A round baler according to one or more of the preceding claims, **characterised in that** the output shaft (29a) is arranged at right angles to the drive shaft (25).

5. A round baler according to one or more of claims 1 to 4, **characterised in that** at least one spur-gear transmission (35, 38) is constructed as an open transmission.

6. A round baler according to one or more of claims 1 to 4, **characterised in that** at least one spur-gear transmission (35, 38) is constructed as a closed transmission.

7. A round baler according to one or more of the preceding claims, **characterised in that** the power is transmitted from at least one baling member (37a, 38a), which is driven directly by the spur gear (35), to at least one further baling member (41, 42, 43, 44) by spur gears (46) which are fixed, but rotatably arranged on a side wall (6).

8. A round baler according to one or more of the preceding claims, **characterised in that** at least one other output shaft (26, 51, 60), extending transversely to the rotation axis (38b, 40b) of a baling member (38a, 40a), has the function of driving one or more baling members (48, 58, 17).

9. A round baler according to one or more of the preceding claims, **characterised in that** at least one output shaft (63) has the function of driving the feed members (19, 20).

10. A round baler according to one or more of the preceding claims, **characterised in that** at least one power divider (24, 52) is associated with the front housing (1).

11. A round baler according to one or more of the preceding claims, **characterised in that** at least one power divider (28, 59) is associated with the rear housing (3).

12. A round baler according to claims 10 and 11, **characterised in that** means (26) are provided for the transmission of power from the power divider (24) to the power divider (28).

13. A round baler according to one or more of the preceding claims, **characterised in that**, for the power-branched drive, a further power divider (52, 59) is connected downstream of at least one power divider (24, 28).

14. A round baler according to one or more of the preceding claims, **characterised in that** the power dividers (24, 28, 52, 59) are constructed as closed transmissions.

15. A round baler according to one or more of the preceding claims, **characterised in that** the power divider (24) and the transmission (61, 62) for driving the feed members (19, 20) form a structural unit.

16. A round baler according to one or more of the preceding claims, **characterised in that** the baling members are formed as baling rollers (17, 37a, 38a, 39a, 40a, 41 to 44, 48, 58) mounted in the side walls.

17. A round baler according to claim 16, **characterised in that** one or more baling rollers has/have pre-assembled spur gears (37 to 40) and bearings and is/are mountable as a module on the side walls (6, 7).

18. A round baler according to claims 16 and 17, **characterised in that** at least one side wall has U-shaped openings for the insertion or removal of a baling roller.

19. A round baler according to one or more of the preceding claims 16 to 18, **characterised in that** one or more baling rollers are pre-assembled on side-wall segments which are mountable as a unit on the side wall.

## Revendications

1. Presse à balles rondes pour des produits agricoles à tige, dont la chambre de compression (12) est délimitée sur la périphérie par des éléments de compression (17, 37a, 38a, 39a, 40a, 41 à 44, 48, 58), aptes à être entraînés, et du côté frontal par des parois latérales (6, 7) divisées en deux, l'entraînement des éléments de compression étant assuré par au moins une boîte de transfert (24), qui est agencée dans la zone d'une paroi latérale (6) et qui comporte un arbre d'entraînement (25) et au moins deux arbres de sortie (29a, 51), au moins un arbre de sortie (29a) d'une boîte de transfert (24, 28, 52, 59) étant agencée parallèlement et à distance de l'axe de rotation (38b, 40b) d'un ou de plusieurs éléments de compression (37a, 38a, 39a, 40a), **caractérisée en ce que** l'arbre de sortie (29a) entraîne un ou plusieurs éléments de compression (38a, 37a) par l'intermédiaire d'au moins un engrenage droit (35, 38).

2. Presse à balles rondes selon la revendication 1,
**caractérisée en ce que** l'arbre de sortie (29a) est formé par l'axe de rotation (31) d'une couronne de différentiel (29) qui est en prise avec l'arbre d'entraînement (25) par l'intermédiaire d'un pignon conique (33).

3. Presse à balles rondes selon l'une quelconque des revendications précédentes, **caractérisée en ce que** l'arbre d'entraînement (25) est l'arbre d'entraînement principal qui est relié de manière active avec la prise de force d'un tracteur, directement par l'intermédiaire d'un arbre de transmission (23) ou d'une ligne d'arbres de transmission ou indirectement par l'intermédiaire d'un engrenage avec pignons à denture en V et un arbre transversal.

4. Presse à balles rondes selon une ou plusieurs des revendications précédentes, **caractérisée en ce que** l'arbre de sortie (29a) est agencé perpendiculairement à l'arbre d'entraînement (25).

5. Presse à balles rondes selon une ou plusieurs des revendications 1 à 4, **caractérisée en ce qu'**au moins un engrenage droit (35, 38) est réalisé sous forme d'engrenage ouvert.

6. Presse à balles rondes selon une ou plusieurs des revendications 1 à 4, **caractérisée en ce qu'**au moins un engrenage droit (35, 38) est réalisé sous forme d'engrenage fermé.

7. Presse à balles rondes selon une ou plusieurs des revendications précédentes, **caractérisée en ce que** la transmission de force est effectuée depuis au moins un élément de compression (37a, 38a), entraîné directement par la roue droite (35), vers au moins un autre élément de compression (41, 42, 43, 44) par l'intermédiaire de roues droites (46) montées sur une paroi latérale (6) de manière stationnaire et néanmoins rotative.

8. Presse à balles rondes selon une ou plusieurs des revendications précédentes, **caractérisée en ce qu'**au moins un autre arbre de sortie (26, 51, 60), orienté perpendiculairement à l'axe de rotation (38b, 40b) d'un élément de compression (38a, 40a), est destiné à entraîner un ou plusieurs éléments de compression (48, 58, 17).

9. Presse à balles rondes selon une ou plusieurs des revendications précédentes, **caractérisée en ce qu'**au moins un arbre de sortie (63) est destiné à entraîner les éléments d'alimentation (19, 20).

10. Presse à balles rondes selon une ou plusieurs des revendications précédentes, **caractérisée en ce qu'**au moins une boîte de transfert (24, 52) est associée au carter avant (1).

11. Presse à balles rondes selon une ou plusieurs des revendications précédentes, **caractérisée en ce qu'**au moins une boîte de transfert (28, 59) est associée au carter arrière (3).

12. Presse à balles rondes selon les revendications 10 et 11, **caractérisée en ce qu'**il est prévu des moyens (26) de transmission de force la boîte de transfert (24) à la boîte de transfert (28).

13. Presse à balles rondes selon une ou plusieurs des revendications précédentes, **caractérisée en ce qu'**une autre boîte de transfert (52, 59), pour un entraînement avec dérivation de puissance, est montée en aval d'au moins une boîte de transfert (24, 28).

14. Presse à balles rondes selon une ou plusieurs des revendications précédentes, **caractérisée en ce que** les boîtes de transfert (24, 28, 52, 59) sont réalisées sous forme d'engrenages fermés.

15. Presse à balles rondes selon une ou plusieurs des revendications précédentes, **caractérisée en ce que** la boîte de transfert (24) et l'engrenage (61, 62), destiné à entraîner les éléments d'alimentation (19, 20), forment une unité.

16. Presse à balles rondes selon une ou plusieurs des revendications précédentes, **caractérisée en ce que** les éléments de compression sont réalisés sous forme de rouleaux de compression (17, 37a, 38a, 39a, 40a, 41 à 44, 48, 58) montés dans les parois latérales (6, 7).

17. Presse à balles rondes selon la revendication 16, **caractérisée en ce qu'**un ou plusieurs rouleaux de compression comportent des roues droites (37 à 40) et des paliers pré-assemblés et sont aptes à être montés sous forme de module sur les parois latérales (6, 7).

18. Presse à balles rondes selon les revendications 16 et 17, **caractérisée en ce qu'**au moins une paroi latérale comporte des évidements en forme de U pour monter et démonter un rouleau de compression.

19. Presse à balles rondes selon une ou plusieurs des revendications 16 à 18, **caractérisée en ce qu'**un ou plusieurs rouleaux de compression sont pré-montés sur des segments de paroi latérale, lesquels peuvent être montés sous forme d'unité sur la paroi latérale.
